# EUROPEAN PATENT APPLICATION

(11) **EP 4 597 706 A1**
(43) Date of publication of application: **06.08.2025**
(21) Application number: 24155560.6
(22) Date of filing: 02.02.2024
(51) Int. Cl.: H01M 50/24, H01M 50/204, H01M 50/244

(54) **BATTERY PACK, ELECTRIC SYSTEM COMPRISING THE BATTERY PACK, AND MANUFACTURING METHOD FOR A BATTERY PACK**

(71) Applicant: Rimac Technology LLC, 10431 Sveta Nedelja (HR)
(72) Inventor: Gracin, Roko, 10000 Zagreb (HR)
(74) Representative: Sonnenberg Harrison Partnerschaft mbB

(57) **Abstract**

A manufacturing method for a battery pack, an electric system comprising the battery pack, and a battery pack are disclosed. The battery pack comprises at least one battery system having at least one energy storage unit, a boundary member covering a surface of the at least one battery system, a filler provided in between the at least one battery system and the boundary member. The boundary member provides an at least partially closed volume at the at least one battery system. The filler is provided in the at least partially closed volume between and/or around the at least one energy storage unit and the boundary member.

## Description

### FIELD OF THE INVENTION

This invention relates in general to the technical field of electric energy storage systems, and in particular to batteries or battery packs for electric systems.

### BACKGROUND OF THE INVENTION

Batteries or electric energy storage systems are increasingly used to power various components in electric systems such as static power constructions or vehicle constructions, especially hybrid and electric vehicles. During normal operation, batteries in such electric systems are subject to different kinds of forces, vibration and mechanical stress, which affects the durability, performance and safety of the batteries.

Batteries consist of individual battery cells or energy storage units, typically arranged within a housing and secured by a holder. Mechanical stability and rigidity and a robust design of the batteries are beneficial to preserving overall system safety and ensuring optimal performance while minimizing the risk of damage or failure during mechanical stress. Robust housing materials and design are beneficial for protecting the delicate and costly internal components and preventing hazardous situations, like short circuits or thermal runaway. Adequate cooling and thermal management systems are necessary to maintain optimal operating conditions. At the same time, the housing seals the battery from the environment.

Injection molding of non-conductive battery components is a well-known challenge with regard to short lead times and high tooling costs for modifications. Introducing changes to system dimensions requires the creation of new tooling and a complex development process. In combination with the specific design requirements, this constraint has a negative impact on the business case of any project, reducing efficiency and flexibility to adapt to changing requirements.

DE 10 2010 046 530 B4 discloses an accumulator module, comprising a housing, wherein the housing has a filling compound on the inside, onto which an at least one secondary cell can be placed or placed during loading of the housing. The accumulator module is characterized in that the filling compound at least during the loading of the housing with the at least one secondary cell is capable of flowing, that the housing and/or the at least one secondary cell are dimensioned and/or designed in such a way that in the loaded state of the housing of a free space is formed at least in sections between the housing wall and the adjacent lateral surface of the at least one secondary cell, and that the filling compound is dimensioned in such a way that the same during loading of the housing with the at least one secondary cell penetrates at least partially into said free space.

DE 10 2014 215 616 A1 discloses a battery system for an electrically powered vehicle that has at least one battery module, which is arranged in a receptacle of the vehicle, and a casing surrounding the battery module, which seals the battery module off from the surroundings in the manner of a housing, wherein the casing consists at least in sections of a film.

It is an objective of the present application to provide a battery or a battery pack and a manufacturing method for the battery pack that provides structural stability to the components of the battery pack and that is easily adaptable to changes of system dimensions.

### SUMMARY OF THE INVENTION

The above objective is solved by a battery pack comprising at least one battery system having at least one energy storage unit, a boundary member covering a surface of the at least one battery system, a filler provided in between the at least one battery system and the boundary member. The boundary member provides an at least partially closed volume at the at least one battery system. The filler is provided in the at least partially closed volume between and/or around the at least one energy storage unit and the boundary member.

The at least one battery system comprises at least one energy storage unit and can be connected with another battery system. The boundary member provides a boundary to an expansion of the filler. The filler has a liquid form before it cures or hardens. The filler provides structural stability and rigidity of the battery pack. In one example, the boundary member covers the surface of the at least one battery system without being in direct contact or being at least partially in contact with the surface of the at least one battery system. The filler is provided in between the at least one battery system and the boundary member such to be in contact with the at least one energy storage unit and the boundary member.

Structural stability of the battery pack is primarily attributed to the components and their integration, ensuring alignment with design and assembly specifications for electronic systems incorporating the battery pack. In addition, structural integrity and rigidity of the battery pack is an important factor due to its dimensions as well as the loads and stresses it may be subjected to during operation.

In one aspect, the boundary member is attached to at least one edge of the at least one battery system.

The attaching of the boundary member to the at least one battery system leads to the possibility of adaptation to different battery system sizes and shapes, ensuring a secure and customized attaching. Also, reduced material usage is achieved as only specific edges are chosen.

In one aspect, the boundary member is sealed around the at least one battery system.

When sealed around the at least one battery system, the boundary member provides a controlled environment and results in high adaptability to different shapes of battery systems, reduced manufacturing time, and thus reduced manufacturing costs.

In another aspect, the boundary member comprises at least one layer of one of a bag, a film, a foil, a sheet, a plurality of sheet elements or a combination thereof.

Such kind of boundary member allows for a compact and efficient encapsulation of the battery system resulting in both conformity and flexibility and is easier to handle and to integrate into the manufacturing process.

In another aspect, the filler comprises one of a two-component filler or an expandable foam, preferably the two-component filler being one of a polyurethane or epoxy.

Two-component fillers and expandable foams can be tailored to fill specific voids or volumes, resulting in greater design flexibility and providing excellent structural stability. When injected into the designated volume or space, they expand and conform to the surrounding structures, creating a strong and supportive framework, resulting in maintaining structural integrity for safety and performance. Also, two-component fillers and expandable foams are often lighter when compared with traditional rigid support structures.

In another aspect, the at least one battery system comprises at least two battery systems connected with at least one of a connection element and/or a cooling element.

By combining the capacities of at least two battery systems, the overall energy storage capacity of the system is augmented, contributing to an increased energy density. Connecting more than one battery system creates scalable battery system configurations, adapted to the specific power and energy requirements of different applications. Moreover, standardized connection elements and/or cooling elements can streamline the manufacturing process.

In another aspect, the battery pack further comprises a separator provided in the closed volume between the at least two battery systems.

The separator allows for facilitation of removal and/or installation of one of the at least two battery systems, as well as for a modular maintenance, wherein the separator enables the removal of a specific battery system without affecting an adj acent battery system. Thus, maintenance procedures are simplified, and downtime is reduced. Also, scalability of the battery pack can be facilitated.

In another aspect, the battery pack further comprises a housing accommodating the at least one battery system.

The housing provides a robust and protective enclosure of the battery pack and acts as a dedicated and secure physical barrier, protecting the enclosed at least one battery system from external elements such as impacts, vibrations, and debris.

In another aspect, the boundary member is at least partially in contact with the filler and the housing.

The contact between the filler and the housing through the boundary member creates a cohesive and integrated structure, contributing to enhanced overall structural integrity of the battery pack. This robust construction helps withstand external forces and maintain stability.

In another aspect the boundary member is made of a material providing an adaptable form, so that the boundary member may expand and fill a space comprised in the housing. The boundary member can thus adapt to the form of the housing during the curing/expansion of the filler.

The above objective is further solved by an electric system comprising at least one battery pack.

Examples of the electric system can be one of a vehicle or a stationary system. The electric system comprises all advantages resulting from the battery pack.

The above objective is further solved by a manufacturing method for the battery pack. The method comprises covering the surface of the at least one battery system by the boundary member, mounting the boundary member to at least one edge of the at least one battery system or around the at least one battery system, injecting a filler in between the at least one battery system and the boundary member, and placing the at least one battery system into a housing.

The method leads to a structural stability of the components of the battery pack and meets the design and assembly requirements for electronic systems in which the battery pack will be used.

In one aspect, the placing of the at least one battery system into the housing can be performed before any of the covering, mounting, or injecting.

Such way of the placing allows for a more flexible manufacture of the battery pack.

In another aspect, the injecting of the filler can be performed before the mounting of the boundary member.

Injecting the filler first can simplify the assembly process due to a controlled injection of filler across the battery pack, resulting in an optimized integration of the filler with the components of the battery pack.

In another aspect, the mounting is done by at least one of an adhesive, weld, tape or a temporary self-seal of the boundary member.

The use of adhesive, welding, tape, or a temporary self-seal provides secure mounting of the boundary member to the battery pack, resulting in a reduced risk of leakage or seepage of the filler material, which enhances effective distribution of the filler material between the at least one battery system and the boundary member for improved structural integrity.

In another aspect, injecting of the filler is done via at least one injection point at the boundary member and/or at least one injection point at the battery system.

Injecting the filler through the at least one injection point allows for controlled and precise injection of the filler, which contributes to facilitating the distribution and expansion of the filler, which results in improved structural integrity and a simplified manufacturing process.

In another aspect, the manufacturing method further comprises the steps of hardening the filler by a chemical reaction, and at least partially removing the boundary member from the battery system after the hardening.

The hardened or cured filler provides the desired structural integrity of the power pack. The boundary member can be at least partially removed to allow the hardened or cured filler to be machined.

In another aspect, the manufacturing method further comprises limiting the expansion of the filler in the at least partially closed volume by the housing or the boundary member.

The limitation of the expansion of the filler leads to an improved distribution of the filler within the at least partially closed volume during expansion, which results in a better distribution of the filler and thus improved structural stability of the components of the battery pack within the at least partially closed volume.

### DESCRIPTION OF THE FIGURES

A more complete understanding of the invention and many of the advantages associated therewith may be readily obtained by reference to the following detailed description in conjunction with the enclosed figures.
Fig. 1 is a schematic illustration of a first example of a battery pack.
Fig. 2 is a schematic illustration of a second example of the battery pack.
Fig. 3 is a schematic cross-sectional illustration of the battery pack of Fig. 1.
Fig. 4 is a schematic illustration of a second embodiment of the battery pack.
Fig. 5 is a schematic illustration of another example of a battery pack.
Fig. 6 is a schematic illustration of a part of the battery pack with a filler and separators.
Fig. 7 is a schematic illustration of an electric system with the battery pack.
Fig. 8 is a flowchart of a manufacturing method.
Fig. 9 is an extended flowchart of the manufacturing method.

### DETAILED DESCRIPTION OF THE INVENTION

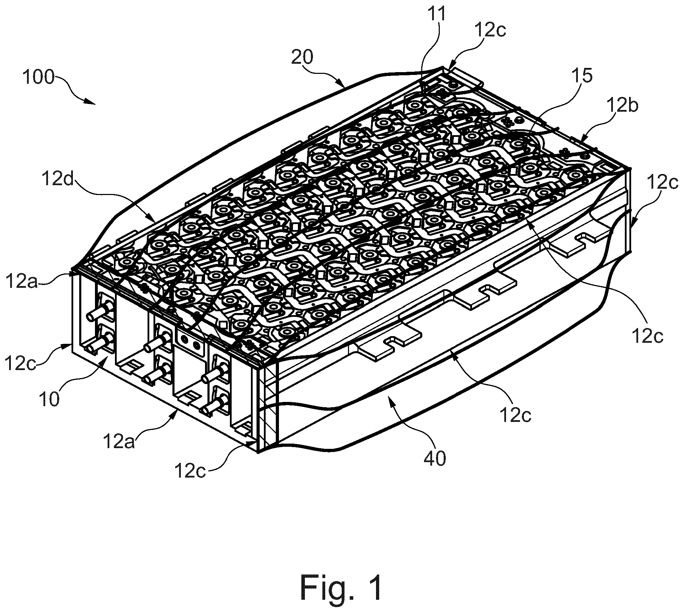

Fig. 1 is a schematic illustration of a first example of a battery pack 100. The battery pack 100 comprises at least one battery system 10 having at least one energy storage unit 15 and a surface 11. The surface 11 is defined by edges 12a, 12b, 12c, 12d, 12e. If the surface 11 is a top surface or bottom surface, the surface 11 is defined by the edges 12a, 12b, 12c and 12d. If the surface 11 is a side surface, the surface 11 is defined by the edges 12e and 12c, or 12e and 12d. If the surface 11 is a front surface or rear surface, the surface 11 is defined by the edges 12e and 12a, or 12e and 12b.

The surface 11 can be one surface of the at least one battery system 10 or a plurality of surfaces of the at least one battery system 10. The surface 11 comprises at least one of the top surface, the side surface, the front surface, the rear surface, and the bottom surface of the battery system 10. In one example, the surface 11 is not a plane or flat surface.

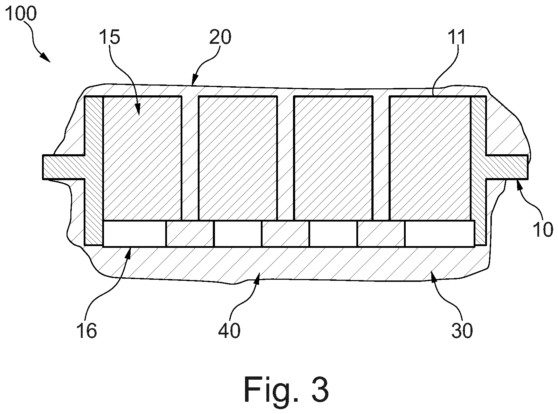

The battery pack 100 further comprises a filler 30, as shown in Fig. 3, and a boundary member 20. The boundary member 20 is made of a material, such as, as a non-limiting example, plastic or polymeric material, which allows a small or predefined amount of expansion. The boundary member 20 covers the surface 11. The boundary member 20 provides an at least partially closed volume 40 at the at least one battery system 10. The at least partially closed volume 40 may comprise in a non-limiting example at least one hole and/or a cutout. In the case that at least one hole and/or a cutout is provided wires, cooling connections and/or other components can be provided through the hole/cutout. The filler 30 has a liquid form before it cures or hardens and provides structural stability and rigidity of the whole battery pack 100. The battery pack 100 further comprises a terminal block 101, a rear block 102 and mounting brackets 103. The rear block 102 comprises a plurality of cooling fittings 105.

As seen in the first example of Fig. 1, the boundary member 20 is mounted (attached) to the edges 12a, 12b and 12e of the at least one battery system 10. In this example, the boundary member 20 covers the top surface, the bottom surface and the side surfaces of the battery system 10.

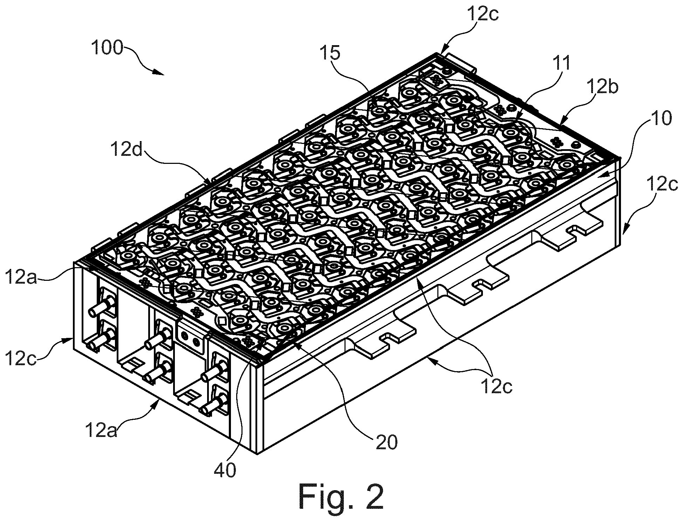

At a second example of the battery pack 100, as illustrated in Fig. 2, the boundary member 20 is mounted (attached) to the edges 12a, 12b, 12c and 12d, thus covering the top surface of the at least one battery system 10. In another example the boundary member 20 is mounted (attached) to at least one edge 12a, 12b, 12c, 12d, 12e of the at least one battery system 10.

In another example, the boundary member 20 is mounted (sealed) around the at least one battery system 10. Mounting of the boundary member 20 comprises one of attaching the boundary member 20 to or sealing the boundary member 20 around the at least one battery system 10. Mounting is done by at least one of adhering, welding, taping or temporary self-sealing of the boundary member 20, as well as other known mounting processes, such as for non-limiting example laser welding. The boundary member 20 comprises in a non-exhaustive example at least one layer of one of a bag, a film, a foil, a sheet, a plurality of sheet elements or a combination thereof.

In a non-limiting example, if the boundary member 20 is a bag, the bag may comprise at least one opening, preferably the opening being selected from one of cutouts for the cooling fittings 105 and/or cutouts for terminals, pre-welded channels or pre-welded sections (not shown).

In a non-limiting example, if the boundary member 20 is a bag and a hole is detected in the boundary member 20, the hole can be closed by adhering a sheet element over the hole. In another non-limiting example, if only the top surface and the bottom surface of the battery pack 100 are covered with the boundary member 20 and leakage occurs on a side surface, the leakage can be sealed by another sheet of temporary self-sealing boundary member 20.

In a further non-limiting example, if the boundary member 20 is a sheet and sealed around the at least one battery system 10, the boundary member 20 is wrapped around the at least one battery system 10 in at least one layer and at least one end of the boundary member 20 is sealed to a previous layer of the boundary member 20.

Fig. 3 is a schematic cross-sectional illustration of the battery pack of Fig. 1. The battery pack 100 may comprise a base plate 16. The at least one energy storage unit 15 is disposed on the base plate 16. The base plate 16, the terminal block 101, the mounting brackets 103 and the rear block 102 define a case or box in which the plurality of energy storage units 15 is placed. The rear block 102 is provided opposite to the terminal block 101. The filler 30 is provided in between the at least one battery system 10 and the boundary member 20. The filler 30 is provided in the at least partially closed volume 40 between and/or around the at least one energy storage unit 15 and the boundary member 20. In a non-limiting example of a battery system 10 having sixty energy storage units 15, the filler 30 is provided in between and/or around the sixty energy storage units 15 and the boundary member 20. The filler 30 is in direct contact with the plurality of energy storage units 15 and the boundary member 20 after the cure/expansion of the filler 30. The existence of the boundary member 20 around the battery system 10 provides in conjunction with the cured/expanded filler 30 structural stability to the battery system 10 and the energy storage units 15 from all directions.

The filler 30 comprises one of a two component filler or an expandable foam. In an example, the two component filler is one of a polyurethane or epoxy. In another example, the two component filler comprises further components leading to a three component filler or a multi component filler. The filler 30 can be made from any polymeric material which can be applied between and/or around the at least one energy storage unit 15 in the at least partially closed volume 40. The filler 30 can be in a liquid form and hardens or cures due to a chemical reaction of the components. The filler 30 expands within the closed volume 40 while the filler 30 hardens or cures and encases the at least one energy storage unit 15. The boundary member 20 provides a boundary to the expansion of the filler 30. The boundary member 20 thus ensures a constant distribution of the filler 30 during expansion within the at least partially closed volume 40 and thus facilitates the stability of the battery pack 100. The cured/expanded filler 30 acts as a support member, eliminating the need for additional support structures for other components of the battery pack 100 within the at least closed volume 40, such as for non-limiting example, wiring (including grounding and electric wirings) and cooling pipes. Moreover, as the boundary member 20 expands with the expansion of the filler 30, also surrounding components or external components outside the closed volume 40, to which the boundary member 20 adapts during expansion, will be supported by the boundary member 20 which thus facilitates the stability and rigidity of the entire system.

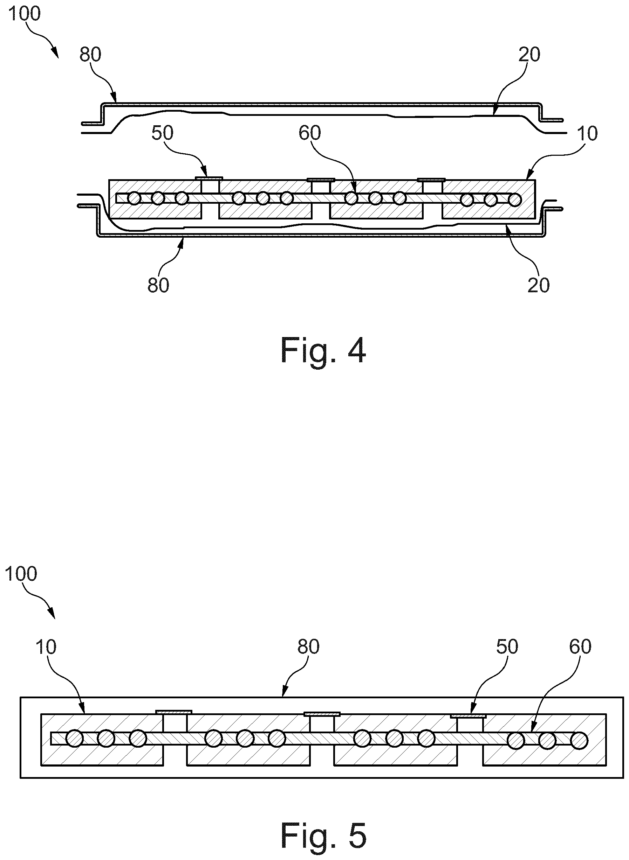

Fig. 4 is a schematic illustration of a second embodiment of the battery pack 100. In this non-limiting example, the battery pack 100 comprises at least two battery systems 10. The at least two battery systems 10 are connected with at least one of a connection element 50 and a cooling element 60. The connection element 50 is a high voltage connection element which connects the at least two battery systems 10 electrically, and which is known from the prior art. The cooling element 60 supports regulating the temperature of the battery pack 100 and is known from the prior art. Thus, the connection element 50 and the cooling element 60 are not described herein in detail for the sake of brevity.

The battery pack 100 further comprises a housing 80 accommodating the at least one battery system 10. In a non-limiting example, the boundary member 20 may be positioned as a sheet in a first half of the housing 80 prior to the placement of the at least one battery system 10, preceding the encasement and sealing of the at least one battery system 10 with the boundary member 20.

As seen in Fig. 5, in another non-limiting example, the at least one battery system 10 can be placed into the housing 80 before a surface 11 of at least one battery system 10 is covered by the boundary member 20.

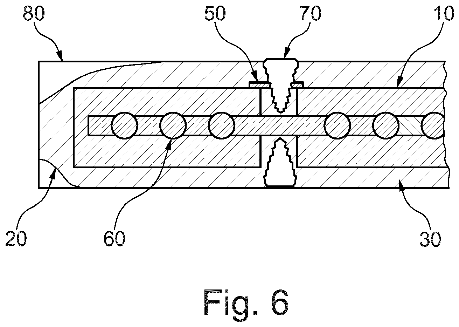

Fig. 6 illustrates a part of the battery pack 100, wherein the plurality of battery systems 10 are provided in a housing 80 and covered by the boundary member 20. Thereby, the boundary member 20 is at least partially in contact with the filler 30 and the housing 80. In other words, the boundary member 20 is at least partially in contact with the filler 30 in direction of the at least partially closed volume 40, and at least partially in contact with the housing 80 opposite the direction of the at least partially closed volume 40. The boundary member 20 can adapt to the form of the housing 80 before or during the curing/expansion of the filler 30. For this purpose, the boundary member 20 is made of a material providing an adaptable form, so that the boundary member 20 may expand or stretch and thus fill a space comprised in at least one part of the housing 80. The space is thereby defined between a wall of the housing 80 and the boundary member 20. The filler 30 may further provide a reduction of heat transfer from the environment, for example, when the battery pack 100 is exposed to high and low temperatures, preferably to extremely high (> 50°C) and/or extremely low (< 0°C) temperatures. The filler 30 may thereby provide an improvement of the health and/or lifetime and/or longevity of the battery pack 100. In addition, if the battery pack 100 comprises at least two battery systems 10, the filler 30 can provide module-to-module thermal insulation in the case of a thermal event.

As seen in Fig. 6, the battery pack 100 further comprises at least one separator 70. The separator 70 is provided in the closed volume 40 between adjacent two of the at least two battery systems 10. The separator 70 is a physical separator and is held in position by the filler 30. The separator 70 facilitates removal of one battery system 10 from the at least two battery systems 10. Thus, the separator 70 enables easy removal of a single battery system 10 from the entire battery pack 100.

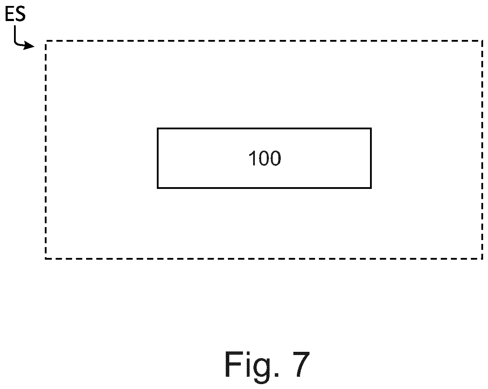

Fig. 7 is a schematic illustration of an electric system ES comprising the battery pack 100. The electric system ES can be one of a vehicle or a stationary system. If the electric system ES is a vehicle, it can be any air, land, or water vehicle. If the electric system ES is a stationary system, it can be any structure that relies on the storage or provision of electric energy independently of a power grid.

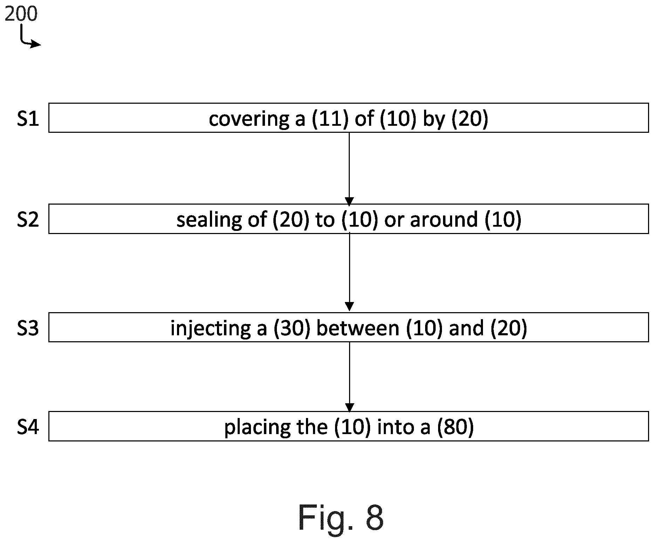

Fig. 8 illustrates a flowchart of a manufacturing method for the battery pack 100. In a first step the surface 11 of the at least one battery system 10 is covered S1 by the boundary member 20. The boundary member is then mounted S2 to at least one edge 12a, 12b, 12c, 12d, 12e of the at least one battery system 10 or around the at least one battery system 10. In one non-limiting example, the boundary member 20 as a bag mounted by enveloping the at least one battery system 10 and adhering to the edges 12a and 12e of the at least one battery system 10. In another non-limiting example the boundary member 20 is a foil mounted around the at least one battery system 10 by sealing the edges of the foil after enveloping the at least one battery system 10. Thereby, the mounting S2 is done by at least one of an adhesive, welding, tape or a temporary self-seal of the boundary member. After the mounting S2 of the boundary member 20, the at least partially closed volume 40 is provided. The filler 30 is injected S3 in between the at least one battery system 10 and the boundary member 20. The injection S3 of the filler 30 can be done via at least one injection point at the boundary member 20 and/or at least one injection point at the battery system 10. The at least one injection point at the boundary member 20 might be a hole made into the boundary member 20 before injection S3 which could be closed with another sheet of temporary self-sealing boundary member 20 after injection S3 of the filler 30. The injection S3 of the filler 30 can be performed also before the mounting S2 of the boundary member 20. In that case, the filler 30 can be injected in between and/or around the at least one energy storage unit 15 before the mounting S2 of the boundary member 20. The at least one battery system 10 is placed S4 into a housing 80. The placing S4 of the at least one battery system 10 into the housing 80 can be performed before any of the covering S1 the surface 11, mounting S2 the boundary member 20, or injecting S3 the filler 30.

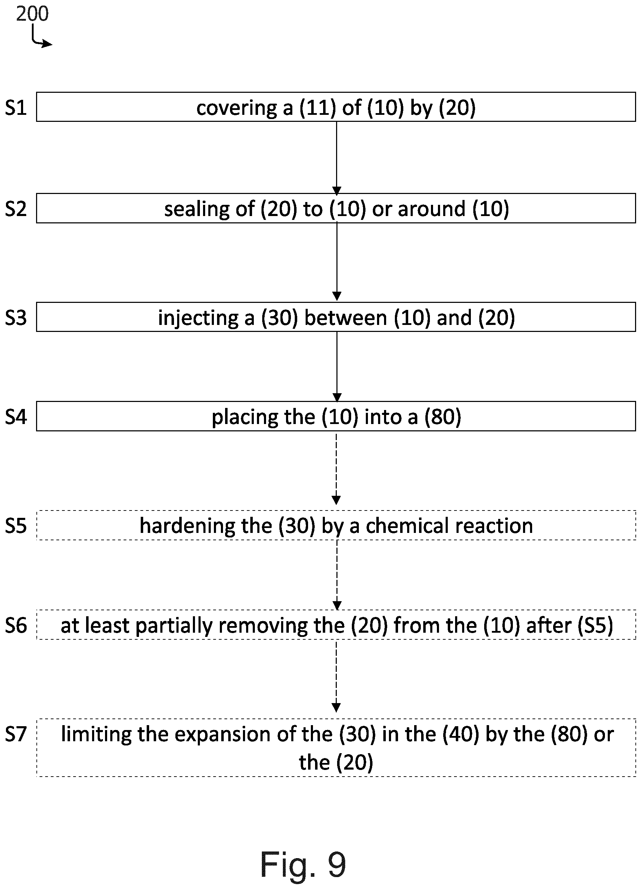

As shown in Fig. 9, in another step, the filler 30 hardens or cures S5 by a chemical reaction. As the filler 30 hardens S5, the filler 30 expands within the at least partially closed volume 40. After the hardening or curing S5 of the filler 30 the boundary member 20 can be at least partially removed S6 from the battery system 10. In this case, the boundary member 20 provides only a structural boundary for the expansion of the filler 30 during the hardening or curing S5 which can be removed afterwards.

In another step of the method, the expansion of the filler 30, caused by the chemical reaction during the hardening S5, is limited S7 in the at least partially closed volume 40 by the housing 80 or the boundary member 20. Thus, an uncontrolled expansion of the filler 30 can be avoided. In addition, the limitation S7 results in a more even distribution of the filler 30 during expansion, ensuring that the filler 30 adheres to the at least one energy storage unit 15, creating a protective, cushioning layer and interconnecting the at least one energy storage unit 15 with the boundary member 20 and other components within the at least closed volume 40.

At the manufacturing method for the battery pack 100 a boundary member 20 is provided which serves to limit S7 the expansion of the filler 30, injected S3 to the at least partially closed volume 40, defined by the boundary member 20 and the at least one battery system 10, resulting in impact resistance, thermal insulation, and vibration damping, which protects the at least one energy storage unit 15 from external mechanical stresses while maintaining an efficient operating temperature.

### REFERENCE SIGNS

- 100: battery pack
- 10: battery system
- 11: surface
- 12a, 12b, 12c, 12d: edge
- 15: energy storage units
- 16: base plate
- 20: boundary member
- 30: filler
- 40: closed volume
- 50: connection element
- 60: cooling element
- 70: separator
- 80: housing
- 200: manufacturing method

## Claims

1. A battery pack (100), comprising:
at least one battery system (10) having at least one energy storage unit (15);
a boundary member (20) covering a surface (11) of the at least one battery system (10); and
a filler (30) provided in between the at least one battery system (10) and the boundary member (20), wherein
the boundary member (20) provides an at least partially closed volume (40) at the at least one battery system (10), and wherein the filler (30) is provided in the at least partially closed volume (40) between and/or around the at least one energy storage unit (15) and the boundary member (20).

2. The battery pack (100) according to claim 1, wherein
the boundary member (20) is attached to at least one edge (12a; 12b; 12c; 12d; 12e) of the at least one battery system (10).

3. The battery pack (100) according to claim 1, wherein
the boundary member (20) is sealed around the at least one battery system (10).

4. The battery pack (100) according to any one of claims 1 to 3, wherein
the boundary member (20) comprises at least one layer of one of a bag, a film, a foil, a sheet, a plurality of sheet elements or a combination thereof.

5. The battery pack (100) according to any of the previous claims, wherein
the filler (30) comprises one of a two component filler or an expandable foam, preferably the two-component filler being one of a polyurethane or epoxy.

6. The battery pack (100) according to any of the previous claims, wherein
the at least one battery system (10) comprises at least two battery systems (10) connected with at least one of a connection element (50) and/or a cooling element (60).

7. The battery pack (100) according to claim 6, further comprising:
a separator (70) provided in the closed volume (40) between the at least two battery systems (10).

8. The battery pack (100) according to any of the previous claims, further comprising:
a housing (80) accommodating the at least one battery system (10).

9. The battery pack (100) according to claim 8, wherein
the boundary member (20) is at least partially in contact with the filler (30) and the housing (80).

10. The battery pack (100) according to claim 8 or 9, wherein
the boundary member (20) is made of a material providing an adaptable form, so that the boundary member (20) may expand and fill a space comprised in the housing (80).

11. Electric system (ES) comprising at least one battery pack (100) according to claims 1 to 10.

12. A manufacturing method (200) for a battery pack (100), the method comprising:
covering (S 1) a surface (11) of at least one battery system (10) by a boundary member (20);
mounting (S2) the boundary member (20) to at least one edge (12a; 12b;
12c; 12d; 12e) of the at least one battery system (10) or around the at least one battery system (10);
injecting (S3) a filler (30) in between the at least one battery system (10) and the boundary member (20);
placing (S4) the at least one battery system (10) into a housing (80).

13. The method (200) according to claim 12, wherein
placing (S4) of the at least one battery system (10) into the housing (80) can be performed before any of the covering (S1), mounting (S2), or injecting (S3).

14. The method (200) according to claim 12 or 13, wherein
injecting (S3) of the filler (30) can be performed before the mounting (S2) of the boundary member (20).

15. The method (200) according to one of the claims 12 to 14, wherein mounting (S2) is done by at least one of an adhesive, weld, tape or a temporary self-seal of the boundary member (20).

16. The method (200) according to one of the claims 12 to 15, wherein
injecting (S3) of the filler (30) is done via at least one injection point at the boundary member (20) and/or at least one injection point at the battery system (10).

17. The method (200) according to one of the claims 12 to 16, further comprising:
hardening (S5) the filler (30) by a chemical reaction; and
at least partially removing (S6) the boundary member (20) from the battery system (10) after the hardening (S5).

18. The method (200) according to one of the claims 12 to 17, further comprising:
limiting (S7) the expansion of the filler (30) in the at least partially closed volume (40) by the housing (80) or the boundary member (20).
